(19) Europäisches Patentamt
European Patent Office
Office européen des brevets

(11) EP 0 928 321 B1

(12) EUROPEAN PATENT SPECIFICATION

(45) Date of publication and mention of the grant of the patent:
**14.04.2004 Bulletin 2004/16**

(21) Application number: **97941123.8**

(22) Date of filing: **24.09.1997**

(51) Int Cl.$^7$: **C09D 11/00**, C09D 11/10, C08G 61/02

(86) International application number:
**PCT/GB1997/002598**

(87) International publication number:
**WO 1998/013430 (02.04.1998 Gazette 1998/13)**

(54) **BINDER RESINS FOR INK COMPOSITIONS**

BINDEMITTEL-HARZE FÜR TINTENZUSAMMENSETZUNGEN

RESINES DE LIAISON DESTINEES A DES COMPOSITIONS D'ENCRE

(84) Designated Contracting States:
**AT BE CH DE DK ES FI FR GB GR IE IT LI LU MC NL PT SE**

(30) Priority: **24.09.1996 US 718783**

(43) Date of publication of application:
**14.07.1999 Bulletin 1999/28**

(73) Proprietor: **Videojet Technologies Inc.**
**Wood Dale, IL 60191-673 (US)**

(72) Inventor: **ZHU, Linfang**
**Naperville, IL 60565 (US)**

(74) Representative: **McGowan, Nigel George et al**
**Siemens Shared Services Limited**
**Siemens House**
**Oldbury**
**Bracknell Berkshire RG12 8FZ (GB)**

(56) References cited:
**EP-A- 0 731 149** **US-A- 5 554 719**

- **DATABASE WPI Section Ch, Week 8609 Derwent Publications Ltd., London, GB; Class A14, AN 86-058372 XP002051475 & JP 61 009 427 A (TOSHIBA KK) , 17 January 1986**
- **PATENT ABSTRACTS OF JAPAN vol. 016, no. 249 (C-0948), 8 June 1992 & JP 04 057866 A (SANEI KAGAKU KK;OTHERS: 01), 25 February 1992,**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 928 321 B1

Printed by Jouve, 75001 PARIS (FR)

## Description

The present invention relates to binder resins useful for preparing ink compositions in general, and to binder resins useful for preparing ink jet ink compositions in particular.

The use of binder resins in ink compositions is well known. Binder resins serve as the carrier for the colorant and help in securing the printed message to the print medium. Several binder resins have been disclosed. For example, U.S. Patent 3,028,349 discloses the use of imine modified acidic resins in high gloss moisture setting printing inks.

U.S. Patent 4,177,076 discloses the use of a water or alcohol soluble copolymer of styrene, a monoacrylate or monomethacrylate of a polyhydric alcohol and an $\alpha,\beta$-unsaturated carboxylic acid useful for preparing printing inks such as gravure inks or flexo inks. U.S. Patent 5,316,575 discloses certain water soluble polymers and copolymers of acrylic acid or alkyl acrylic acid useful for preparing jet ink compositions, and U.S. Patent 5,158,606 discloses that a styrene-butadiene copolymer, styrene-butadiene-vinylpyridine terpolymer, polyethylene, polyurethane, vinylpyrrolidone-vinyl acetate copolymer, and others can be used as binder resins for preparing low-rub off printing inks such as news printing inks.

The binder resin should possess certain characteristics to be useful as a binder resin. Thus, for example, the binder resin should be soluble or dispersible in the ink vehicle. The binder resin also preferably should be able to form a film on the colorant. The film should form rapidly and be durable against abrasion and moisture. The ink industry is actively involved in the search for new binder resins with the hope of obtaining resins with better performance or cost advantage. Thus, there exists a need for new binder resins suitable for use in ink compositions.

Ink jet printing is a well-known technique by which printing is accomplished without contact between the printing device and the substrate on which the printed characters are deposited. Briefly described, ink jet printing involves the technique of projecting a stream of ink droplets to a surface and controlling the direction of the stream electronically so that the droplets are caused to form the desired printed image on that surface. This technique of noncontact printing is well suited for application of characters onto a variety of surfaces including porous and non-porous surfaces.

Reviews of various aspects of ink jet printing can be found in these publications: Kuhn et al., *Scientific American*, April, 1979, 162-178; and Keeling, *Phys. Technol.*, 12(5), 196-303 (1981). Various ink jet apparatuses are described in the following U.S. patents: 3,060,429, 3,298,030, 3,373,437, 3,416,153, and 3,673,601.

In general, an ink jet ink composition must meet certain rigid requirements to be useful in ink jet printing operations. These relate to viscosity, resistivity, solubility, compatibility of components, and wettability of the substrate. Further, the ink must be quick-drying and smear resistant, must be capable of passing through the ink jet nozzle without clogging, and must permit rapid cleanup of the machine components with minimum effort.

Ink jet compositions have been disclosed. These generally contain a carrier, a binder resin, a colorant, and other optional additives. The carrier can be aqueous or non-aqueous. For jet printing on non-porous substrates such as glass, ceramics, metal or plastics, ink jet compositions have been prepared mostly using non-aqueous solvents.

Traditional ink jet inks for non-porous substrates have been mostly based on methanol and methyl ethyl ketone. These solvents offer fast drying jet inks and have great ability to dissolve or disperse binder resins and colorants. Additionally, these solvents have the ability to ionize conducting agents and thus provide good conductivity, especially for continuous ink jet printing operation. Thus, for example, U.S. Patent 4,834,799 discloses a jet ink composition suitable for jet printing onto vinyl substrates which contain vinyl polymers and plasticizers. The composition is formulated to include a resin component having a pendant amino group such as a copolymer of methyl methacrylate and dimethylaminoethyl methacrylate, a dye, and a carrier. The carrier typically comprises a mixture of a lower alcohol such as methanol and a lower ketone such as MEK.

However, in view of the increasing public awareness and governmental regulations concerning the safety of MEK and methanol, it has become important to develop jet inks that do not contain a significant amount of MEK or methanol. To achieve this goal, ethanol based jet inks have been proposed. For example, UK Patent Application GB 2 286 402 reportedly discloses a jet ink for continuous ink jet printers containing ethanol as the liquid vehicle and a polyamide resin as the binder resin. Although ethanol based jet inks have served with some success, due to the slow evaporation rate of ethanol, certain ethanol based inks do not dry fast enough for many ink jet applications.

Thus, there exists a need for jet ink compositions that are suitable for printing on non-porous substrates such as glass, plastic, metal, or ceramics. There also exists a need for a jet ink composition that is substantially free of methanol and MEK. There further exists a need for jet ink compositions that dry fast enough for continuous jet ink printers. There further exists a need for ethanol based jet ink compositions that have short drying times.

These and other objects of the present invention will be apparent from the detailed description of the preferred embodiments of the invention set forth below.

The foregoing needs have been fulfilled to a great extent by the present invention which provides certain novel binder resins and ink compositions comprising such binder resins.

According to the present invention there is provided a jet ink composition comprising an ink carrier, a colorant, and a binder resin which is a polymer comprising hydroxystyrene.

Preferably, the jet ink composition is suitable for use in an ink jet printer and has a Brookfield viscosity of from 1.8 cps to 7.0 cps at 25°C, an electrical resistivity of from 20 ohm-cm to 2,000 ohm-cm, and a sonic velocity of from 1200 meters/second to 1700 meters/second.

Preferably, the binder resin is a copolymer of hydroxystyrene and a monomer polymerizable by a free radical method. The monomer may be methyl methacrylate.

Preferably, in the jet ink composition according to the present invention the polymer has the formula:

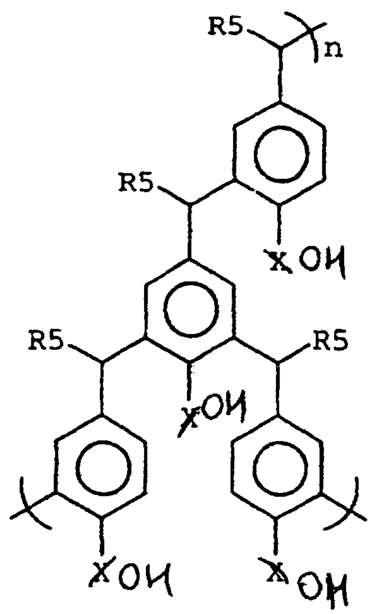

wherein $R_5$ is alkyl having from 1 to 6 carbon atoms.

Preferably, the jet ink composition further comprises a surfactant.

Preferably, the jet ink composition further comprises another binder resin. The other binder resin may be a polyurethane resin or a styrene-acrylic copolymer.

Preferably, the jet ink composition further comprises an adhesion promoter such as an organosilane or an organotitanate.

The present invention further provides jet ink compositions suitable for jet printing on paper, glass, metal, ceramic, or plastic surfaces comprising a solvent, a colorant, and a binder resin having the formula I, II, III, or IV:

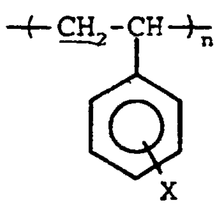

(I)

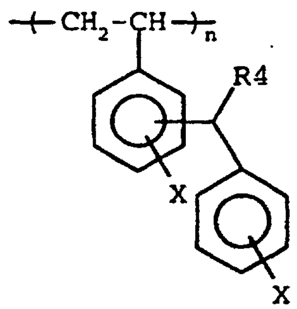

(II)

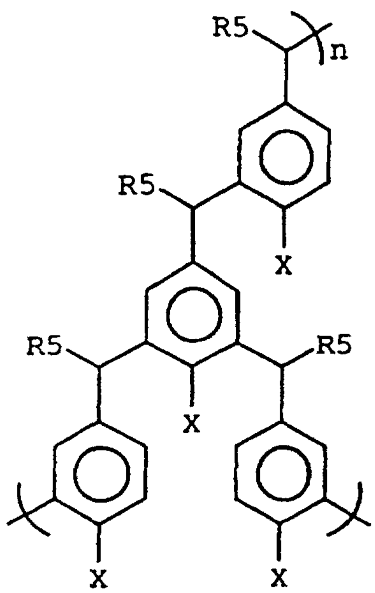

(III)

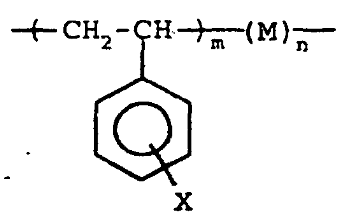

(IV)

wherein X is OH; $R_4$ and $R_5$ are $C_1$-$C_6$ alkyl; and M is a polymerizable unsaturated monomer.

In formulas I-IV, m and n can be of any suitable integer, preferably from about 10 to about 1000, and more preferably from about 10 to about 100.

The present invention also provides a method of forming printed images on porous and non-porous surfaces using the ink compositions of the present invention. In one aspect of the present the invention, the method comprises projecting a stream of droplets of the ink composition onto a surface and controlling the direction of the stream electronically so that the ink droplets form the desired printed image on the surface.

The invention has been described and disclosed below in connection with certain preferred embodiments and procedures.

The present invention provides jet ink compositions comprising a binder resin having the formula I:

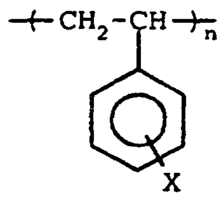

(I)

wherein X is OH. X can be the ortho, para, or meta position, preferably para.

**[0026]** The present invention further provides jet ink compositions comprising a binder resin having the formula II or III:

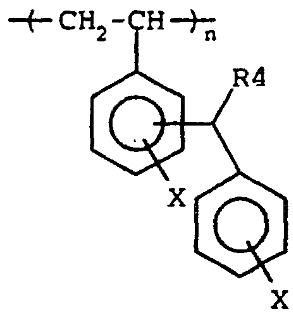

(II)

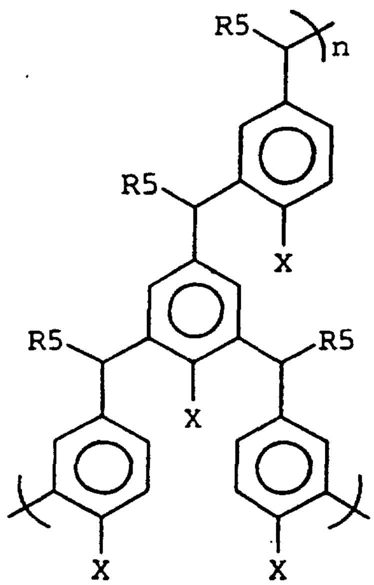

(III)

wherein X is OH. $R_4$ and $R_5$ are alkyl. The alkyl moieties $R_4$ and $R_5$ can have from about 1 to about 10 carbon atoms, preferably from about 1 to about 6 carbon atoms, and more preferably from about 1 to about 3 carbon atoms. X can be the ortho, para, or meta position, preferably para.

**[0027]** The present invention further provides a jek ink composition comprising a binder resin having the formula IV:

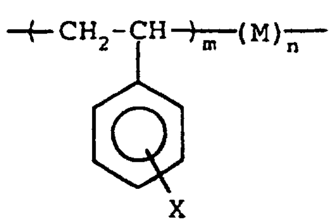

(IV)

wherein X is OH; M is an unsaturated polymerizable monomer; with the proviso that M is not an alkyl acrylate, alkadiene, or allyl ester. X can be the ortho, para, or meta position, preferably para.

**[0028]** In formulas I-IV, m and n can be of any suitable integer, preferably from about 10 to about 1000, and more preferably from about 10 to about 100.

The present invention further provides jet ink compositions comprising a binder resin having the formula I, II, III, or IV:

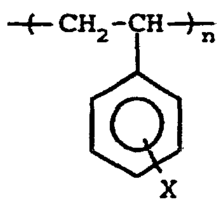

(I)

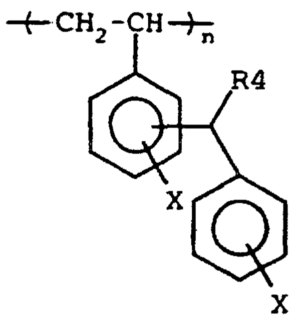

(II)

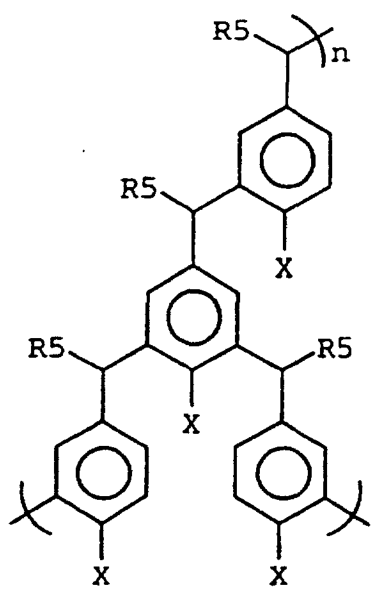

(III)

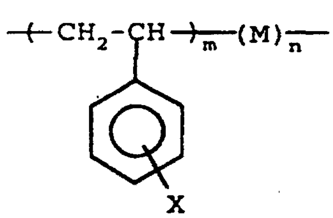

(IV)

wherein X is OH; $R_4$ and $R_5$ are alkyl; and M is a polymerizable unsaturated monomer. The alkyl moieties $R_4$ and $R_5$ can have from about 1 to about 10 carbon atoms, preferably from about 1 to about 6 carbon atoms, and more preferably from about 1 to about 3 carbon atoms. X can be the ortho, para, or meta position, preferably para.

**[0030]** In formulas I-IV, m and n can be of any suitable integer, preferably from about 10 to about 1000, and more preferably from about 10 to about 100.

The present invention also provides jet ink compositions comprising a binder resin of any of formulas I-IV. The present invention further provides jet ink compositions comprising binder resins of any of formulas I-IV that are free or substantially free of MEK and methanol and suitable for printing on non-porous substrates such as paper, glass, metals, ceramics, and plastics.

GENERAL PROPERTIES

In general, the jet ink compositions of the present invention exhibit the following characteristics for use in ink jet printing systems: (1) a viscosity of from about 1.6 to about 7.0 centipoises (cps) at 25° C; (2) an electrical resistivity of from about 50 to about 2000 ohm-cm; and (3) a sonic velocity of from about 1100 to about 1500 meters/second.

A detailed discussion of the ingredients and the characteristics of the inventive ink compositions, particularly the jet ink composition, is set forth below.

INK CARRIER

Any suitable ink carrier can be used to prepare the jet ink composition of the present invention. Suitable solvents include alcohols, esters, ketones, amides, ethers, and halides. Alcohols other than methanol and MEK are preferred solvents. Particular examples of preferred solvents include ethanol and acetone. Typically the carrier is present in an amount of from about 40% by weight to about 90% by weight, and preferably from about 60% by weight to about 85% by weight of the jet ink composition. A mixture of solvents can also be used. For example, a mixture of acetone and ethanol can be used. Preferably, the amount of acetone in the mixture is less than that of ethanol. Thus, acetone can be used in an amount of up to about 30% by weight and ethanol up to about 70% by weight, and preferably acetone can be used in an amount of up to about 25% by weight and ethanol up to about 75% of the solvent mixture. Small quantities of water can also be used in the carrier to provide the necessary electrical conductivity when using non-aqueous solvents as the jet ink carrier.

COLORANTS

The ink composition comprises one or more colorants that impart the desired color to the printed message. Any dye, pigment, or lake that may be dissolved or dispersed in the ink composition can be used. Dyes are particularly preferred for use with non-aqueous solvents.

Examples of dyes suitable for use in the preparation of the ink composition of the present invention, particularly the jet ink composition, include the yellow dyes such as C.I. Solvent Yellow 19 (C.I. 13900A), C.I. Solvent Yellow 21 (C.I. 18690), C.I. Solvent Yellow 61, C.I. Solvent Yellow 80, FD&C Yellow #5, Yellow Shade 16948, Acid Yellow 23, Levaderm Lemon Yellow (Mobay), Spirit Fast Yellow 3G, Aizen Spilon Yellow C-GNH (Hodagaya Chemical Co.), and Pergasol Yellow CGP (Ciba-Geigy), the orange dyes such as C.I. Solvent Orange 1 (C.I. 11920), C.I. Orange 37, C.I. Orange 40, Diaresin Orange K (Mitsubishi Chemical Industries, Ltd.), Diaresin Orange G (Mitsubishi Chemical Industries, Ltd.), and Sumiplast Orange 3G (Sumitomo Chemical Co., Ltd.), red dyes such as C.I. Solvent Red 8, C.I. Solvent Red 81, C.I. Solvent Red 82, C.I. Solvent Red 84, C.I. Solvent Red 100, Cibacron Brilliant Red 38-A (Aldrich Chemical Co.), Drimarene Brilliant Red E-6A (Pylam, Inc.), and Acid Red 92, Reactive red 31 (ICI America), pink dyes such as Diaresin Pink M (Mitsubishi Chemical Industries, Ltd.), Sumiplast Pink RFF (Sumitomo Chemical Co.), and Direct Brill Pink B Ground Crude (Crompton & Knowles), violet dyes such as Basic Violet 3, C.I. Solvent Violet 8, C.I. Solvent Violet 21, Diaresin Violet (Mitsubishi), Diaresin Violet D, and Sumiplast Violet RR (Sumitomo), blue dyes such as C.I. Solvent Blue 2, C.I. Solvent Blue 11, C.I. Solvent Blue 25, C.I. Solvent Blue 36, and C.I. Solvent Blue 55, green dyes such as C.I. Solvent Green 3 brown dyes such as C.I. Solvent Brown 3 and Diaresin Brown A (Mitsubishi), black dyes such as Nigrosine dyes, C.I. Solvent Black 3, C.I. Solvent Black 5, C.I. Solvent Black 7, C.I. Solvent Black 22, C.I. Solvent Black 27, C.I. Solvent Black 29, C.I. Solvent Black 48, and Acid Black 123.

Any suitable amount of the colorant can be used. The colorant is generally present in the ink composition in an amount required to produce the desired contrast and readability. The colorant is preferably present in an amount of from about 0.1% by weight to about 10% by weight, more preferably in an amount of from about 1% by weight to about 5% by weight, and even more preferably in an amount of from about 2% by weight to about 4% by weight of the ink composition.

BINDER RESINS

Any suitable binder resin can be used. Suitable binder resins that can be used in the present invention include resins that are soluble or dispersible in the ink carrier. The binder resin may form a true solution or a colloidal suspension that may be used if filterable without substantial separation through a filter having a pore size substantially smaller than the printer capillary tube, for example through a 1 µm filter.

The jet ink composition can be advantageously prepared using a binder resin of formulas I-IV. Further preferred jet ink compositions include a resin of formula I. Thus, a particular example of a preferred binder resin is poly(p-hydroxystyrene)(PHS).

The resins of formula I can be prepared by methods known to those of ordinary skill in the art. For example, PHS can be prepared from homopolymers of 4-acetoxystyrene as set forth, e.g., in U.S. Patents 4,678,843, 4,689,371, 4,822,862, 4,857,601 and 5,239,015. Or alternatively, 4-hydroxy acetophenone can be reduced under suitable conditions, e.g., by using hydrogen and a catalyst such as platinum or palladium, to obtain 4-hydroxyphenyl methyl carbinol, which can be dehydrated under suitable conditions, e.g., using sulfuric acid, to obtain 4-hydroxy styrene monomer. The hydroxy styrene monomer can be polymerized by methods known to those of ordinary skill in the art, including polymerization by using a free radical initiator such as azobisisobutyronitrile (AIBN).

The Hoechst Celanese PHS is available in two molecular weights. The PHS with an average molecular weight of 6,000 has a Tg of 155°C, and a hydroxyl number of 7.00. The PHS with an average molecular weight of 30,000 has a Tg of 155°C, and a hydroxyl number of 7.06.

PHS of any suitable molecular weight can be used. The glass transition temperature (Tg) of PHS varies with the molecular weight in certain molecular weight range. Thus, the Tg ranges from about 155°C to about 190°C for a PHS of molecular weight ranging from about 5,000 to about 100,000, respectively. PHS can also be obtained from Hoechst Celanese Corp. in Dallas, TX.

Preferred jet ink compositions also include a resin of formula II. A jet ink compositions which is further preferred includes a resin wherein $R_4$ is methyl, as represented, e.g., by the following formula IIa:

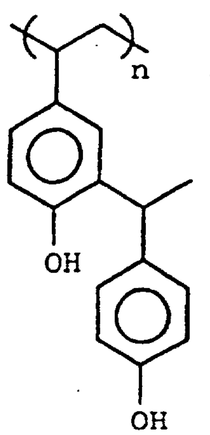

(IIa)

The resins of formula II can be prepared by methods known to those of ordinary skill in the art. For example, by Friedel Crafts alkylation of poly(p-hydroxystyrene) with a suitable haloalkylphenol using suitable Friedel Crafts catalysts. The hydroxyl group is preferably protected prior to the alkylation. The resin of formula IIa can be prepared by the acid catalyzed polymerization of p-hydroxystyrene in the presence of p-hydroxyphenyl methyl carbinol.

Resin of formula IIa can be obtained from Hoechst Celanese Corp. as a polymer grade poly(p-hydroxystyrene) (PHS-PG). PHS-PG is a tan powder having a molecular weight of about 4,500-6,000, a polydispersity of about 2.0-2.6, and a glass transition temperature of about 135-145°C.

Preferred jet ink compositions also include a resin of formula III. A jet ink compositions which is further preferred includes a resin wherein $R_5$ is methyl, as represented, e.g., by the following formula IIIa:

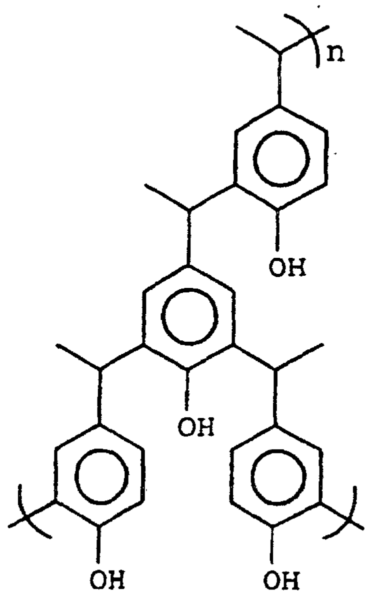

(IIIa)

Resins of formula III can be prepared by methods known to those of ordinary skill in the art. For example, resin of formula IIIa can be prepared by the acid catalyzed cationic polycondensation of hydroxyphenyl methyl carbinol.

Resin of formula IIIa can also be obtained from Hoechst Celanese Corp. as a Novolak grade poly(p-hydroxystyrene) (PHS-N). PHS-N is a non-aldehyde derived polymer having a molecular weight of about 5,400-7,000, a polydispersity of about 1.5-1.9, and a Tg of about 140-145°C.

Preferred jet ink compositions also include a resin of formula IV, wherein M is a suitable polymerizable unsaturated monomer. Examples of M include acrylates, methacrylates, styrenics, vinylics, alkadienes, and others.

Examples of acrylates include acrylic acid, acrylamide, methyl acrylate, ethyl acrylate, propyl acrylate, buylacrylate, hydroxyethyl acrylate, and hydroxypropyl acrylate. Examples of methacrylates include methacrylic acid, methacrylamide, methyl methacrylate, ethyl methacrylate, propyl methacrylate, butyl methacrylate, hydroxyethyl methacrylate, and hydroxypropyl methacrylate.

Examples of styrenics include styrene, α-methyl styrene, and styrene substituted with alkyl, alkoxy, nitro, amino, cyano, halo, hydroxy, hydroxyalkyl, haloalkyl, amido, and carboxyl. The alkyl or the alkoxy moieties in the above recited monomers can have from about 1 to about 10 carbon atoms, preferably from about 1 to about 6 carbon atoms.

Examples of vinylics include alkenes such as ethylene, propylene, and butylene, vinyl halides such as vinyl fluoride, chloride, or bromide, vinylidene halides such as vinylidene fluoride, chloride, or bromide, tetrafluoroethylene, and chlorotrifluoroethylene, vinyl heterocyclics such as vinyl pyridine, vinyl pyrrolidone, and vinyl caprolactam, vinyl esters such vinyl acetate, propionate, or butyrate, vinyl ethers such as vinyl methyl ether, vinyl ethyl ether, and vinyl propyl ether, and vinyl nitriles such as acrylonitrile.

Examples of alkadienes include butadiene, pentadiene, hexadiene, isoprene, and chloroprene. A copolymer comprising a vinyl ester moiety can be converted, e.g., by hydrolysis, to obtain a copolymer comprising a vinyl alcohol moiety.

Further preferred jet ink compositions include a resin of formula IV.

Copolymers of the formula IV can be prepared by methods known to those of ordinary skill in the art, e.g., by methods discussed in U.S. Patents 4,880,487 and 5,239,015. Thus, poly (p-hydroxystyrene-co-M) can be prepared by the free radical bulk, solution, suspension or emulsion copolymerization of p-hydroxystyrene and a polymerizable monomer M. Suitable free radical polymerization catalysts are well known in the art and non-exclusively include AIBN and peroxides such as benzoyl peroxide. Other copolymer derivatives of formula IV also can be prepared by this method. Thus, p-methoxy or p-acetoxy styrene and a polymerizable monomer can be copolymerized as described above.

The ink compositions of the present invention can include, in addition to the binder resins of formula I-IV, other binder resins also. Any suitable additional binder resin can be used. Examples of such binder resins include rosin and modified rosins, shellac, asphalts, phenolic resins and rosin-modified phenolic resins, alkyd resins, polystyrene resins and copolymers thereof such as styrene acrylic copolymers, terpene resins, alkylated urea formaldehyde resins, alkylated melamine formaldehyde resins, polyamide resins, polyimide resins, vinyl resins, such as polyvinyl acetate and polyvinyl alcohol, ketone resins, acrylic resins, such as polyacrylic acid and polymethacrylic acid, epoxide resins, polyurethane resins, and cellulosic resins, such as nitro cellulose, ethyl cellulose, cellulose acetate butyrate, and carboxymethyl cellulose.

Examples of acrylic resins include styrene-acrylic resins which can be made by copolymerizing styrene with acrylic monomers such as acrylic acid, or methacrylic, and optionally with alkyl acylate monomers such as methyl acrylate, methyl methacrylate, butyl acrylate, butyl methacrylate, hydroxyethyl acrylate, and hydroxyethyl methacrylate. Several styrene-acrylic resins are commercially available. For example, Rohm & Haas Co., in Philadelphia, PA sells RHOPLEX AC-261, which is an acrylic polymer emmulsion. S.C. Johnson & Co., in Racine, Wisconsin sells styrene acrylics under the tradename JONCRYL. Examples of JONCRYL resins include JONCRYL 555, 586,678,680, 682, 683, and 67. JONCRYL 682, a preferred resin, has a weight average molecular weight of about 1700, an acid number of about 238, a softening temperature of about 105°C, and a glass transition temperature of about 56°C.

Another preferred additional binder resin is a thermoplastic polyurethane, preferably a flexible thermoplastic urethane. Flexible thermoplastic polyurethane resins can be produced by the reaction of suitable diols and diisocyanates. Examples of suitable diols include ethylene glycol, propylene glycol, propanediol, butanediol, polyethylene glycol, polypropylene glycol, polyethylene glycol adipate diol, polyethylene glycol succinate diol, and polytetrahydrofuran diol. Examples of suitable diisocyanates include 2,4-tolylene diisocyanate, 2,6-tolylene diisocyanate, 4,4'-diphenylmethane diisocyanate, and hexamethylene diisocyanate. Polyurethanes made from polypropylene glycol and 4,4'-diphenylmethane diisocyanate are particularly preferred. Polyurethanes having a weight average molecular weight in the range of from about 4,000 to about 22,000 are preferred and polyurethanes having a weight average molecular weight in the range of from about 7,000 to about 9,000 are further preferred.

Examples of preferred polyurethanes that are useful in the present invention include the flexible thermoplastic polyurethane solutions sold under the commercial name of SURKOPAK™ by Kane International Corp. (Mitchanol), Rye, New York. Several grades of polyurethanes are sold under this name and include SURKOPAK 2135, SURKOPAK 5299, SURKOPAK 5244, SURKOPAK 5255, SURKOPAK 2X, SURKOPAK 5322, SURKOPAK 5311, and SURKOPAK XL. The physical properties of the polyurethane solutions are presented in Table 1 below.

Table 1.

| Properties of the SURKOPAK Polyurethane Resins | | | | | | | | |
|---|---|---|---|---|---|---|---|---|
| Grade | 2135 | 5299 | 5244* | 5255 | 2X | 5322** | 5311 | XL |
| Solids % | 80-85 | 80-85 | 73-78 | 73-78 | 65-70 | 68-73 | 63-68 | 68-73 |
| Viscosity (Poise) | 15-25 | 25-30 | 12-16 | 25-30 | 40-50 | 6-8 | 30-40 | 15-20 |
| Solvent | A | A | E | E | E | E/A | E | E/A |
| Flash Point, °C | 12 | 12 | -4 | -4 | -4 | -4 | -4 | -4 |

A = Alcohol; E = Ester; E/A = Mixture of E and A

* Weight Average Molecular Weight Range 18,000 - 22,000

** Weight Average Molecular Weight Range 7,000 - 9,000

These SURKOPAK polyurethanes are non-reactive and are essentially free of isocyanate groups. Among these preferred polyurethane solutions, SURKOPAK 5322 is further preferred. SURKOPAK 5322, a polyurethane composed of polypropylene glycol and 4,4'-diphenylmethane diisocyanate, is sold as a solution in a mixed solvent containing ethyl acetate and isopropanol.

The binder resins can have any suitable molecular weight. The weight average molecular weight of the binder resin is typically in the range of from about 1,500 to about 1,000,000, preferably in the range of from about 5,000 to about 50,000, and more preferably in the range of from about 5,000 to about 30,000.

The binder resins can have any suitable glass transition temperature. The glass transition temperature of the binder resin is typically in the range of from about 50°C to about 200°C, preferably in the range of from about 80°C to about 150°C, and more preferably in the range of from about 100°C to about 150°C.

The binder resin can be present in the ink composition in an amount sufficient to provide good adhesion of the images to the substrates. The resin is generally present in the ink composition in an amount of from about 1% by weight to about 40% by weight of the composition, preferably in an amount of from about 2% by weight to about 20% by weight of the composition, and more preferably in an amount of from about 5% by weight to about 15% by weight of the ink composition. Excessive use of the resin may increase the viscosity of the ink composition, particularly in the case of a jet ink composition, which may lead to poor printing operation and poor quality of the printed message such as smearing.

CONDUCTIVITY AGENTS

Jet printing ink compositions, for best results, should have a low specific resistivity, such as within the range of about 50 to about 2000 ohm-cm. The desired conductivity can be achieved by the addition of an ionizable material. Examples of such ionizable materials include ammonium, alkali, and alkaline earth metal salts such as ammonium hydroxide, lithium nitrate, lithium chloride, lithium thiocyanate, lithium trifluoromethanesulfonate, sodium chloride, potassium chloride, potassium bromide, calcium chloride, dimethylamine hydrochloride, and hydroxylamine hydrochloride. Any suitable amount of the ionizable material can be used. Normally, an ionizable material content of up to about 2% by weight of the ink composition provides the desired conductivity.

SURFACTANTS

The ink compositions may further contain a surfactant. The surfactant helps in obtaining good wetting of the substrates by the ink composition.. The surfactant may be anionic, cationic, nonionic, or amphoteric. Examples of anionic surfactants include, alkylbenzene sulfonates such as dodecylbenzene sulfonate, alkylnaphthyl sulfonates such as butyl or nonyl naphthyl sulfonate, dialkyl sulfosuccinates such as diamyl sulfosuccinate alcohol sulfates such as sodium lauryl sulfate, and perfluorinated carboxylic acids such as perfluorodecanoic acid and perfluorododecanoic acid.

Nonionic surfactants include the alkylesters of polyethylene glycol, fatty acid esters of glycerol, fatty acid esters of glycol, and fluorochemical surfactants such as FC 170C, FC 430, FC 431, FC 740, FC 120, FC 248, FC 352, FC 396, FC 807, and FC 824, which are available from 3M Co. FC 430 and FC 431 are fluoroaliphatic polymeric esters. Cationic surfactants include alkylamines, amine oxides, amine ethoxylates, alkyl hydroxyalkyl imidazolines, quaternary ammonium salts, and amphoteric surfactants include the alkylbetaines, and the amidopropylbetaines.

Particular examples of surfactants include the polyoxyethylene adducts of fluoroaliphatic sulfonamido alcohols of the formula $R_fSO_2N(C_2H_5)\ (CH_2CH_2O)_xH$, wherein $R_f= C_nF_{2n+1}$, n is about 5-10 and preferably 7-9, and x is about 10-20 and preferably about 12-16. For example, FC 170C, is 80% active, amber colored, and nonionic. FC 170C has the structure of $R_fSO_2N(C_2H_5)\ (CH_2CH_2O)_xH$, wherein $R_f= C_nF_{2n+1}$, n is about 8, and x is 14.

The surfactant may be present in the ink composition in any suitable amount. It is typically present in an amount of from about 0.01% to about 1% by weight of the ink composition, preferably in an amount of from about 0.1% to about 0.5% by weight of the ink composition, and more preferably in an amount of from about 0.2% to about 0.4% by weight of the ink composition.

ADHESION PROMOTERS

The ink composition of the present invention may further include an adhesion promoter to further improve the adhesion of the mark. Any suitable adhesion promoter can be utilized. Examples of adhesion promoters include organosilanes and organotitanates. Examples of organosilanes include trichlorosilane, vinyltrichlorosilane, methyltrichlorosilane, methyldichlorosilane, dimethyldichlorosilane, methylvinyldichlorosilane, hexamethyldisilizane, methyltriethoxysilane, methyltrimethoxysilane, vinyltriethoxysilane, vinyltrimethoxysilane, vinyl-*tris*(2-methoxyethoxysilane), vinyltriacetoxysilane, *gamma*-methacryloxypropyl-trimethoxysilane, *gamma*-methacryloxypropyl-*tris*-(2-methoxyethoxy)silane, beta-(3,4-epoxycyclohexyl)ethyltrimethoxysilane, and *gamma*glycidoxypropyltrimethoxysilane. *Gamma*glycidoxypropyltrimethoxysilane is a preferred organosilane and is sold as Silane A-187 by Union Carbide Co. in Danbury, Connecticut.

Examples of organotitanates include transition metal organates such as titanium organates, zirconium organates, and hafnium organates. Commercially available organates include the titanium organates sold by DuPont Chemical Co. under the tradename TYZOR™ titanates. Examples of TYZOR titanates include TYZOR TBT, which is titanium tetra-n-butoxide, TYZOR TPT, which is titanium triisopropoxide, TYZOR GBA, which is titanium diisopropoxide bis (2,4-pentanedionate), TYZOR LA, which is titanium ammoniumlactate, and TYZOR AA, which is titanium acetylacetonate.

Any suitable amount of the adhesion promoter can be used, preferably in an amount of from about 0.1% by weight to about 5% by weight of the ink composition, and more preferably in an amount of from about 0.5% by weight to about 2% by weight of the ink composition.

VISCOSITY

It is essential to the practice of the present invention that the jet ink compositions have a viscosity within the range of about 1.0 to about 10 cps, and preferably about 1.0 to about 7.0 cps, as measured at 25°C, in order to achieve the desired rheological characteristics. As indicated above, the viscosity of the ink composition of the invention is conveniently regulated, as known to those of ordinary skill in the art, for instance, by suitable choice of the quantity

and the molecular weight of the binder resin, the organic solvent, and other additives.

All percentages expressed herein are by weight based on the total weight of the ink composition of the present invention, unless otherwise indicated.

The following examples further illustrate the present invention.

EXAMPLE 1

This example illustrates the preparation of an embodiment of the inventive jet ink composition. This jet ink composition employs a resin of formula II.

The jet ink composition was prepared by combining the ingredients set forth below and mixing them by continuous stirring until a smooth composition was obtained.

| Ingredients | wt.% |
|---|---|
| Duplicating fluid #5, Anhydrous (Eastman Chemical, | 77.5 |
| PHS-PG (Hoechst Celanese) | 10.0 |
| Silane A-187 (Union Carbide) | 1.0 |
| MORFAST BLACK 101 (Keystone Aniline) | 10.0 |
| FC-122 (3M) | 1.5 |
| | 100.0 |

MORFAST BLACK 101 is a Cobalt metal complex dye. Duplicating fluid #5 is denatured ethanol free of MEK and methanol.

The jet ink composition thus prepared was jet printed onto various glass, metal, and plastics substrates. The substrates include glass, tin, steel, aluminum, low density polyethylene (LDPE), high density polyethylene (HDPE), polypropylene, polyethylene terephthalate (PET), polystyrene, and polyvinyl chloride. The prints had good adhesion to all substrates. The prints had good finger rub resistance.

EXAMPLE 2

This example illustrates the preparation of another embodiment of the inventive jet ink composition which employs a resin of formula II.

The jet ink composition was prepared by combining the ingredients set forth below and mixing them by continuous stirring until a smooth composition was obtained.

| Ingredients | wt.% |
|---|---|
| Acetone 99% (Ashland) | 19.0 |
| SDA-23A, 200 Proof | 60.5 |
| PHS-PG (Hoechst Celanese) | 12.0 |
| NUBIAN PC-0850 (Orient Chemical) | 5.0 |
| Tetraethylammonium toluenesulfonate (Aldrich) | 2.5 |
| FC-430 (10% in acetone) (3M) | 1.0 |
| | 100.0 |

NUBIAN PC-0850 is an ethanol-soluble black Nigrosine dye. Nigrosine base, which is not soluble in alcohol, has been made ethanol soluble by reacting it with a surfactant having a sulfonic acid function. SDA-23A is ethanol denatured with acetone, available from Aaper Alcohol Co., in Shelbyville, Connecticut.

The jet ink composition thus prepared was jet printed onto various glass, metal, and plastics substrates. The substrates include glass, tin, steel, aluminum, LDPE, HDPE, polypropylene, PET, polystyrene, and polyvinyl chloride. The prints had good adhesion to all substrates. The prints had good finger rub resistance.

EXAMPLE 3

This example illustrates the preparation of an embodiment of the inventive jet ink composition which employs a resin of formula III.

The jet ink composition was prepared by combining the ingredients set forth below and mixing them by continuous stirring until a smooth composition was obtained.

| Ingredients | wt.% |
|---|---|
| SDA-23A, 200 Proof Ethanol | 83.5 |
| PHS-NG (Hoechst Celanese) | 10.0 |
| Silane A-187 (Union Carbide) | 1.0 |
| FC-430, 10% in acetone (3M) | 0.5 |
| HEKTO VIOLET 610 (Basic Violet 3) (BASF) | 3.0 |
| D.I. Water | 2.0 |
| | 100.0 |

The jet ink composition thus prepared was jet printed onto various glass, metal, and plastics substrates. The substrates include glass, tin, steel, aluminum, LDPE, HDPE, polypropylene, PET, polystyrene, and polyvinyl chloride. The prints had good adhesion to all substrates. The prints had good finger rub resistance.

EXAMPLE 4

This example illustrates the preparation of an embodiment of the inventive jet ink composition which employs a resin of formula III.

The jet ink composition was prepared by combining the ingredients set forth below and mixing them by continuous stirring until a smooth composition was obtained.

| Ingredients | wt.% |
|---|---|
| Acetone 99% (Ashland) | 20.0 |
| Duplicating fluid #5, Anhydrous (Eastman Chemical) | 61.0 |
| PHS-NG(Hoechst Celanese) | 7.0 |
| SURKOPAK 5322 (Mitchanol) | 5.5 |
| HEKTO VIOLET 610 (BASF) | 3.0 |
| TYZOR GBA (DuPont) | 1.0 |
| FC-430 (10% in acetone) (3M) | 0.5 |
| D.I. Water | 2.0 |
| | 100.0 |

The jet ink composition thus prepared was jet printed onto various glass, metal, and plastics substrates. The substrates include glass, tin, steel, aluminum, LDPE, HDPE, polypropylene, PET, polystyrene, and polyvinyl chloride. The prints had good adhesion to all substrates. The prints had good finger rub resistance.

EXAMPLE 5

This example illustrates the preparation of yet another embodiment of the inventive jet ink composition which employs a resin of formula III.

The jet ink composition was prepared by combining the ingredients set forth below and mixing them by continuous stirring until a smooth composition was obtained.

| Ingredients | wt.% |
|---|---|
| Acetone 99% (Ashland) | 20.0 |
| Duplicating fluid #5, Anhydrous | 62.5 |
| PHS-NG (Hoechst Celanese) | 7.0 |
| JONCRYL 682 (S.C. Johnson) | 4.0 |
| HEKTO VIOLET 610 (Basic Violet 3) (BASF) | 3.0 |
| TYZOR GBA (DuPont) | 1.0 |
| FC-430 (10% in acetone) (3M) | 0.5 |

(continued)

| Ingredients | wt.% |
|---|---|
| D.I. Water | 2.0 |
| | 100.0 |

The jet ink composition thus prepared was jet printed onto various glass, metal, and plastics substrates. The substrates include glass, tin, steel, aluminum, LDPE, HDPE, polypropylene, PET, polystyrene, and polyvinyl chloride. The prints had good adhesion to all substrates. The prints had good finger rub resistance.

EXAMPLE 6

This example illustrates the preparation of an embodiment of the inventive jet ink composition which employs a resin of formula IV.

The jet ink composition was prepared by combining the ingredients set forth below and mixing them by continuous stirring until a smooth composition was obtained.

| Ingredients | wt.% |
|---|---|
| Acetone 99% (Ashland) | 20.0 |
| Duplicating fluid #5, Anhydrous | 61.0 |
| Poly(4-hydroxystyrene-co-methyl methacrylate) (Hoechst Celanese) | 12.0 |
| HEKTO VIOLET 610 (BASF) | 3.0 |
| Silane A-187 | 1.0 |
| Tetraethylammonium toluenesulfonate (Aldrich) | 0.5 |
| FC-430 (10% in acetone) (3M) | 0.5 |
| D.I. Water | 2.0 |
| | 100.0 |

The jet ink composition thus prepared was jet printed onto various glass, metal, and plastics substrates. The substrates include glass, tin, steel, aluminum, LDPE, HDPE, polypropylene, PET, polystyrene, and polyvinyl chloride. The prints had good adhesion to all substrates. The prints had good finger rub resistance.

The present invention further provides a process for printing on substrates identifying marks that are rub resistant comprising jet printing onto the substrates using a jet ink composition as described above and drying the identifying marks. The marks can be dried by any method known to those skilled in the art including by natural evaporation, by flowing air, or by heating, e.g., by the use of an IR lamp.

The present invention further provides identifying marks produced by the process of printing described above.

The present invention also provides a process for preparing a jet ink composition suitable for printing rub resistant identifying marks on paper, glass, metal, ceramic, or plastic substrates, comprising combining and mixing a carrier, a colorant and a binder resin.

**Claims**

**1.** A jet ink composition comprising an ink carrier, a colorant, and a binder resin which is a polymer comprising hydroxystyrene.

**2.** A jet ink composition as claimed in claim 1 having a Brookfield viscosity of from 1.8 cps to 7.0 cps at 25°C, an electrical resistivity of from 20 ohm-cm to 2,000 ohm-cm, and a sonic velocity of from 1200 meters/second to 1700 meters/second.

**3.** A jet ink composition as claimed in claim 1, in which said binder resin is a copolymer of hydroxystyrene and a monomer polymerizable by a free radical method.

**4.** A jet ink composition as claimed in claim 3, in which said monomer is methyl methacrylate.

**5.** A jet ink composition as claimed in claim 1, in which said polymer has the formula:

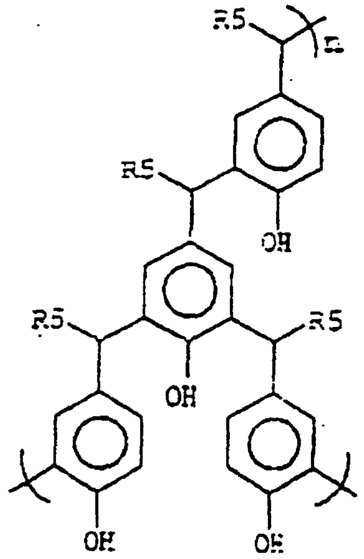

wherein $R_5$ is alkyl having from 1 to 6 carbon atoms.

**6.** A jet ink composition as claimed in any one of the preceding claims further comprising a surfactant.

**7.** A jet ink composition as claimed in any one of the preceding claims further comprising another binder resin.

**8.** A jet ink composition as claimed in claim 7, in which said other binder resin is a polyurethane resin or a styrene-acrylic copolymer.

**9.** A jet ink composition as claimed in any one of the preceding claims further comprising an adhesion promoter such as an organosilane or an organotitanate.

**Patentansprüche**

**1.** Tintenstrahltintenzusammensetzung mit einen Tintenträger, einem Farbstoff und einem Bindemittelharz, bei dem es sich um ein Hydroxystyrol umfassendes Polymer handelt.

**2.** Tintenstrahltintenzusammensetzung nach Anspruch 1 mit einer Brookfield-Viskosität von 1,8 cps bis 7,0 cps bei 25° C, einem spezifischen elektrischen Widerstand von 20 ohm-cm bis 2000 ohm-cm und einer Schallgeschwindigkeit von 1200 m/s bis 1700 m/s.

**3.** Tintenstrahltintenzusammensetzung nach Anspruch 1, bei der das Bindemittelharz ein Copolymer aus Hydroxystyrol und einem Monomer ist, das mittels eines freien Radikalverfahrens polymerisierbar ist.

**4.** Tintenstrahltintenzusammensetzung nach Anspruch 3, bei der das Monomer Methylmetbaorylat ist.

**5.** Tintenstrahltintenzusammensetzung nach Anspruch 1, bei der das Polymer die Formel:

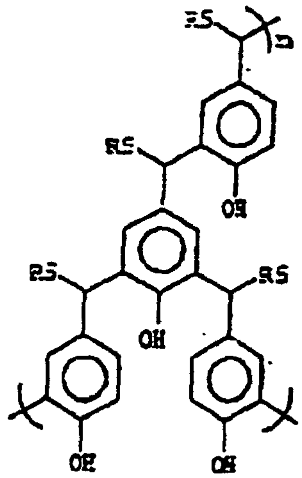

besitzt, worin $R_5$ Alkyl mit 1 bis 6 Kohlenstoffatomen ist.

6. Tintenstrahltintenzusammensetzung nach einem der vorangegangenen Ansprüche, die weiterhin ein Tensid umfasst.

7. Tintenstrahltintenzusammensetzung nach einem der vorangegangenen Ansprüche, die weiterhin ein anderes Bindemittelharz umfasst.

8. Tintenstrahltintenzusammensetzung nach Anspruch 7, bei der das andere Bindemittelharz ein Polyurethanharz oder ein Styrol-Acryl-Copolymer ist.

9. Tintenstrahltintenzusammensetzung nach einem der vorangegangenen Ansprüche, die weiterhin einen Haftvermittler wie z.B. ein Organosilan oder ein Organotitanat umfasst.

**Revendications**

1. Une composition d'encre d'impression à jet d'encre comprenant un support d'encre, un colorant et une résine de liaison qui est un polymère comprenant de l'hydroxystyrène.

2. Une composition d'encre d'impression à jet d'encre selon la revendication 1 ayant une viscosité Brookfield de 1,8 cps à 7,0 cps à 25°C, une résistivité électrique de 20 ohm-cm à 2000 ohm-cm et une vitesse du son de 1200 mètres/seconde à 1700 mètres/seconde.

3. Une composition d'encre d'impression à jet d'encre selon la revendication 1, dans laquelle la résine de liaison est un copolymère d'hydroxystyrène et de monomère polymérisable par une méthode à radicaux libres.

4. Une composition d'encre d'impression à jet d'encre selon la revendication 3, dans laquelle ledit monomère est du méthacrylate de méthyle.

5. Une composition d'encre d'impression à jet d'encre selon la revendication 1, dans laquelle ledit polymère a la formule :

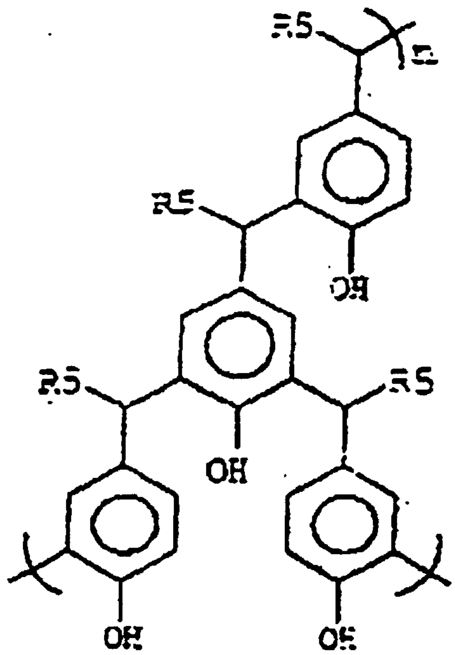

où $R_5$ est de l'alkyle ayant de 1 à 6 atomes de carbone.

**6.** Une composition d'encre d'impression à jet d'encre selon les revendications précédentes, comprenant également un additif mouillant.

**7.** Une composition d'encre d'impression à jet d'encre selon les revendications précédentes, comprenant également une autre résine de liaison.

**8.** Une composition d'encre d'impression à jet d'encre selon la revendication 7, dans laquelle l'autre résine de liaison est une résine de polyuréthane ou un copolymère acrylique de styrène.

**9.** Une composition d'encre d'impression à jet d'encre selon les revendications précédentes, comprenant également un promoteur d'adhérence, comme un organosilane ou un titanate organique.